(19) Europäisches Patentamt
European Patent Office
Office européen des brevets

(11) EP 3 938 440 B1

(12) **EUROPEAN PATENT SPECIFICATION**

(45) Date of publication and mention of the grant of the patent:
**22.03.2023 Bulletin 2023/12**

(21) Application number: **20705082.4**

(22) Date of filing: **20.02.2020**

(51) International Patent Classification (IPC):
***C08L 23/08*** *(2006.01)* ***C08L 23/10*** *(2006.01)*
***C08F 210/06*** *(2006.01)* ***C08F 2/00*** *(2006.01)*
***C08L 23/12*** *(2006.01)*

(52) Cooperative Patent Classification (CPC):
(C-Sets available)
**C08L 23/12;** C08F 110/02; C08F 210/16;
C08L 2205/03; C08L 2205/035; C08L 2207/20

(Cont.)

(86) International application number:
**PCT/EP2020/054422**

(87) International publication number:
**WO 2020/182436 (17.09.2020 Gazette 2020/38)**

(54) **COMPOSITIONS OBTAINED FROM RECYCLED POLYOLEFINS**

AUS RECYCELTEN POLYOLEFINEN ERHALTENE ZUSAMMENSETZUNGEN

COMPOSITIONS OBTENUES À PARTIR DE POLYOLÉFINES RECYCLÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2019 EP 19162075**

(43) Date of publication of application:
**19.01.2022 Bulletin 2022/03**

(73) Proprietor: **Basell Poliolefine Italia S.r.l.**
**20121 Milano (IT)**

(72) Inventors:
- **CAVALIERI, Claudio**
**44122 Ferrara (IT)**
- **GALVAN, Monica**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2007/071494 WO-A1-2015/169690**
**WO-A1-2019/091885**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 2/001;**
**C08F 210/06, C08F 4/6465;**
**C08F 210/06, C08F 4/6492;**
**C08F 210/06, C08F 4/6545;**
**C08L 23/12, C08L 23/16, C08L 23/0815;**
**C08L 23/12, C08L 23/16, C08L 23/0815, C08L 23/04, C08L 23/10;**
**C08L 23/12, C08L 23/16, C08L 23/16, C08L 51/06, C08L 23/12, C08K 3/04;**
C08F 110/02, C08F 2500/12;
C08F 110/06, C08F 2500/12;
C08F 210/06, C08F 210/16, C08F 2500/12;
C08F 210/16, C08F 210/06, C08F 210/08, C08F 2500/12, C08F 2500/39, C08F 2500/17, C08F 2500/27

**Description**

FIELD OF THE INVENTION

The present disclosure relates to compositions obtained from recycled polyolefins mixtures containing mainly propylene and ethylene and a composition comprising propylene-base polymers and linear low-density polyethylene (LLDPE) as compatibilizer.

BACKGROUND OF THE INVENTION

Polyolefins, in particular polyethylene and polypropylene, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In fact, large amounts of waste plastic materials are presently coming from differential recovery of municipal plastic wastes, mainly constituted of flexible packaging (cast film, blown film and BOPP film), rigid packaging, blow moulded bottles and injection moulded containers. Through a step of separation from other polymers, such as PVC, PET or PS, two main polyolefinic fractions are obtained, namely polyethylenes (in particular HDPE LDPE, LLDPE) and polypropylenes (homopolymers, random copolymers, heterophasic copolymers).

One of the key problems in polyolefin recycling, especially when dealing with material streams from post-consumer waste (PCW) is the difficulty to quantitatively separate polypropylene (PP) and polyethylene (PE). Commercial recyclates from PCW sources have been found generally to contain mixtures of PP and PE, the minor component reaching up to < 50 wt%.

Such recycled PP/PE-blends normally suffer from deteriorated mechanical and optical properties, have poor performance in odour and taste and they generally suffer from poor compatibility between the main polymer phases, resulting in both limited impact strength and heat deflection resistance. Such inferior performance is partly caused by PE with its lower stiffness and melting point forming the continuous phase even at PP concentrations up to 65% because of the normally higher viscosity of the PE components in PCW.

These drawbacks normally exclude the application for high quality parts, and it only allows the use in low-cost and non-demanding applications.

Some research has been done to improve the compatibility between PP and PE. According to Wei Zhu et al.; Journal of Applied Polymer Science, Vol. 58, p. 515-521 (1995) the addition of ethylene - propylene copolymer as compatibilizer to blends of polypropylene and polyethylene can remedy the situation of high incompatibility to some extent and that ethylene-propylene rubber (EPR) or ethylene-propylene-diene rubber (EPDM) can substantially improve the toughness of the blends, but at the expense of deteriorated moduli and tensile strength.

WO2013075241 A1 also discloses a method of using ethylene-propylene-diene rubber (EPDM) or a random ethylene-propylene copolymer (EP-RACO) as compatibilizer for the recycling plastic blends.

It has now been found that a composition comprising propylene-base polymers and linear low-density polyethylene (LLDPE) can be used as compatibilizer for this mixture allowing better tensile properties.

SUMMARY OF THE INVENTION

The present disclosure relates to polyolefin compositions comprising:

T1) 50-90wt%, of a recycled polyolefin mixture containing from 90 wt% to 50 wt% of propylene derived units and from 5 wt% to 40 wt% of ethylene derived units optionally containing up to 15 wt% of a further olefin derived units selected from 1-butene, 1-hexene, 1-octene; said mixture having:

i) fraction soluble in xylene at 25°C ranging from 5 wt% to 30 wt%;
ii) intrinsic viscosity [η] (measured in tetrahydronaphthalene at 135 °C) of the xylene soluble fraction at 25°C comprised between 0.5 to 4.0 dl/g;
iii) melt flow rate (230°C/2.16 kg) ranging between 1 and 50 g/10 min;
iv) melting point measured by DSC ranging from 148°C to 162°C;

T2) 10-50 wt% of a polyolefin component containing:

A) 5-35% by weight of a propylene homopolymer or a propylene ethylene copolymer containing 90% by weight or more of propylene units; containing 10% by weight or less of a fraction soluble in xylene at 25°C (XSA), both

the amount of propylene units and of the fraction XSA being referred to the weight of A);
B) 20-50% by weight; of an ethylene homopolymer having 5% by weight or less of a fraction soluble in xylene at 25°C ($XS_B$) referred to the weight of (B); and
C) 30-60% by weight of a terpolymer, wherein the terpolymer contains ethylene, propylene and 1-butene derived units containing from 45% to 65% by weight of ethylene units; and from 15% to 38% by weight of 1-butene units; and containing from 30% to 85% by weight of a fraction soluble in xylene at 25°C (XSc), the amount of ethylene units; 1-butene units and the fraction XSc being referred to the weight of (C);

the sum of the amounts of (A), (B) and (C) being referred to the total weight of (A) , (B) and (C), being 100;
the sum of the amount of T1) and T2), being referred to the total weight of T1) and T2), being 100.

DETAILED DESCRIPTION OF THE INVENTION

The present disclosure relates to polyolefin compositions comprising:

T1)50-90 wt%, preferably 60-80 wt%; more preferably from 65 wt% to 75 wt% of a of a recycled polyolefin mixture containing from 90 wt% to 50 wt% of propylene derived units and from 5 wt% to 40 wt% of ethylene derived units optionally containing up to 15 wt% of a further olefin derived units selected from 1-butene, 1-hexene, 1-octene; said mixture having:

i) fraction soluble in xylene at 25°C ranging from 5 wt% to 30 wt%; preferably from 6 wt % to 15 wt%;
ii) intrinsic viscosity [η] (measured in tetrahydronaphthalene at 135 °C) of the xylene soluble fraction at 25°C comprised between 0.5 to 4.0 dl/g preferably comprised between 0.8 to 3.0 dl/g; more preferably comprised between 1.0 to 2.5 dl/g;
iii) melt flow rate (230°C/2.16 kg) ranging between 1 and 50 g/10 min; preferably ranging between 4 and 30 g/10 min; more preferably ranging between 6 and 20 g/10 min;
iv) melting point measured by DSC ranging from 148 °C to 162 °C; preferably ranging from 150 °C to 160 °C; more preferably ranging from 155 °C to 159 °C;

T2) 50-10 wt% preferably 40-20 wt%; more preferably from 35 wt% to 25 wt% of a polyolefin component containing:

A) 5-35% by weight; preferably 10-30 % by weight; more preferably 15-23% by weight of a propylene homopolymer or a propylene ethylene copolymer containing 90% by weight or more preferably 95 % by weight or more; preferably 97% by weight or more of propylene units; component A) containing 10% by weight or less preferably 8 wt% or less more preferably 6 wt% or less of a fraction soluble in xylene at 25°C (XSa), both the amount of propylene units and of the fraction $XS_A$ being referred to the weight of A);
B) 20-50% by weight; preferably 25-45% by weight; more preferably 30-40 % by weight an ethylene homopolymer having 5% by weight or less; preferably 4 wt% or less; more preferably 3 wt% or less of a fraction soluble in xylene at 25°C ($XS_B$), the amount of the fraction $XS_B$ being referred to the weight of (B); and
C) 30-60% by weight; preferably 35-55% by weight; more preferably 40-50 % by weight of a terpolymer of ethylene, propylene and 1-butene containing from 45% to 65% by weight preferably from 48 % to 62 % by weight; more preferably from 50 % to 60 % by weight of ethylene units; and from 15% to 38%; preferably from 18 % to 33 % by weight, more preferably from 20 % to 30 % by weight of 1-butene units; and containing from 30% to 85%; preferably from 35% to 50% by weight of a fraction soluble in xylene at 25°C (XSc), both the amount of ethylene units and of the fraction XSc being referred to the weight of (C);

the sum of the amounts of (A), (B) and (C) being referred to the total weight of (A) , (B) and (C), being 100;
the sum of the amount of T1) and T2), being referred to the total weight of T1) and T2), being 100;
Component T1) is preferably a mixture of recycled polypropylene and polyethylene blend. Preferably component T1) has a tensile modulus ranging from 500 MPa to 1800 MPa; more preferably from 900 MPa to 1500 MPa.

Preferably component T1) has an elongation at break ranging from 20 % to 200 %; more preferably from 30 % to 100%.
Preferably component T1) has a tensile stress at break ranging from 9 MPa to 30 MPa, preferably ranging from 12 MPa to 25 MPa; more preferably ranging from 13 MPa to 20 MPa.
Component (A) is preferably propylene homopolymer; component (A) preferably has the melt flow rate (230°C/2.16 kg) ranging between 50 and 200 g/10 min; more preferably between 80 and 170 g/10 min.
The ethylene homopolymer (B) may contain up to 5% by weight preferably up to 3% by weight of comonomer

units. When comonomer units are present, they derive from one or more comonomers selected from $C_3$ to $C_8$ alpha-olefins. Specific examples of such alpha-olefin comonomers are propylene, butene-1, pentene-1, 4-methylpentene-1, hexene-1 and octene-1, preferably propylene or 1-butene. Preferably the ethylene homopolymer (B) does not contain additional comonomer units.

The ethylene homopolymer (B) preferably has a melt flow rate (230°C/2.16 kg) comprised between 0.1 and 50 g/10 min. preferably comprised between 0.1 and 30 g/10 min; more preferably comprised between 0.1 and 10 g/10 min.

Preferably the ethylene homopolymer (B) may have a density (determined according to ISO 1183 at 23°C) of from 0.940 to 0.965 $g/cm^3$.

Components (A)+ (B) blended together preferably have the melt flow rate (230°C/2.16 kg) comprised between 0.1 and 70 g/10 min. preferably between 1 and 50 g/10 min; more preferably between 8 and 40 g/10 min.

Preferably the polyolefin composition (A)+(B)+(C) has a melt flow rate (230°C/2.16 kg) comprised between 0.5 to 25 g/10min preferably from 0.8 to 20.0g/10min; even more preferably from 1.0 to 18.0g/10min..

Preferably the xylene soluble fraction at 25° C of the polyolefin composition (A+B+C) has an intrinsic viscosity [η] (measured in tetrahydronaphthalene at 135 °C) comprised between 2.4 and 3.5 dl/g, preferably the intrinsic viscosity is comprised between 2.5 and 3.3 dl/g.

For the present disclosure, the term "copolymer" means polymer containing two kinds of comonomers, such as propylene and ethylene or ethylene and 1-butene and the term "terpolymer" means polymer containing three kinds of comonomers, such as propylene, ethylene and 1-butene.

It has been found that the polyolefin composition T2) can be prepared by a sequential polymerization, comprising at least three sequential steps, wherein components (A), (B) and (C) are prepared in separate subsequent steps, operating in each step, except the first step, in the presence of the polymer formed and the catalyst used in the preceding step. The catalyst is added only in the first step, however its activity is such that it is still active for all the subsequent steps.

The polymerization, which can be continuous or batch, is carried out following known techniques and operating in liquid phase, in the presence or not of inert diluent, or in gas phase, or by mixed liquid-gas techniques. It is preferable to carry out the polymerization in gas phase.

Reaction time, pressure and temperature relative to the polymerization steps are not critical, however it is best if the temperature is from 50 to 100 °C. The pressure can be atmospheric or higher.

The regulation of the molecular weight is carried out by using known regulators, hydrogen in particular.

The said polymerizations are preferably carried out in the presence of a Ziegler-Natta catalyst. Typically, a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound and an electron donor compound supported on $MgCl_2$.

Preferred organometallic compounds are the aluminum alkyl compounds.

Thus in a preferred embodiment, the polymer composition B) of the present invention is obtainable by using a Ziegler-Natta polymerization catalyst, more preferably a Ziegler-Natta catalyst supported on $MgCl_2$, even more preferably a Ziegler-Natta catalyst comprising the product of reaction of:

1) a solid catalyst component comprising a Ti compound and an electron donor (internal electron-donor) supported on $MgCl_2$;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters, preferably diisobutyl phthalate, and succinic acid esters.

Suitable succinic acid esters are represented by the formula (I):

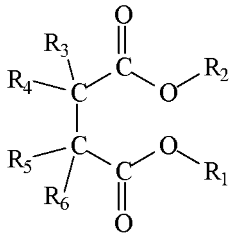

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from $C_1$-$C_{20}$ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula $R^1{}_aR^2{}_bSi(OR^3)_c$, where a and b are integer numbers from 0 to 2, c is an integer from 1 to 3 and the sum (a+b+c) is 4; $R^1$, $R^2$ and $R^3$ are alkyl, cycloalkyl or aryl radicals with 1-18 carbon atoms optionally containing heteroatoms.

Useful examples of silicon compounds are (tert-butyl)$_2$Si($OCH_3$)$_2$, (cyclohexyl)(methyl)Si ($OCH_3$)$_2$, (phenyl)$_2$Si($OCH_3$)$_2$ and (cyclopentyl)$_2$Si($OCH_3$)$_2$.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

The use of component T2) in the composition of the present disclosure make possible to increase the poor tensile performance of component T1) so that it can be recycled in a more valuable applications such as injection moulding articles.

The following examples are given in order to illustrate, but not limit the present disclosure.

## EXAMPLES

## CHARACTERIZATIONS

### Xylene-soluble (XS) Fraction at 25 °C

Solubility in xylene: Determined as follows:
2.5 g of polymer and 250 ml of xylene are introduced in a glass flask equipped with a refrigerator and a magnetic stirrer.

The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.

The content of the xylene-soluble fraction is expressed as a percentage of the original 2.5 grams and then, by the difference (complementary to 100%), the xylene insoluble percentage (%);

XS of components B) and C) have been calculated by using the formula:

$$XS_{tot}=WaXS_A+WbXS_B+WcXS_C$$

[0079] wherein Wa, Wb and Wc are the relative amount of components A, B and C, respectively, and (A+B+C=1).

**Melt Flow Rate (MFR)**

Measured according to ISO 1133 at 230 °C with a load of 2.16 kg, unless otherwise specified.

**Tensile modulus**

The Tensile Modulus has been measured according to ISO 527-2, and ISO 1873-2 on an injection moulded samples.

**Tensile strength at yield; tensile strength at break; elongation at break; elongation at yield**

Tensile strength at yield; tensile strength at break; elongation at break; elongation at yield have been measured according to according to ISO 527-2, and acording to ISO 1873-2 on an injection moulded samples.

**Intrinsic Viscosity (IV)**

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ $\eta$ ].

**Comonomer ($C_2$ and $C_4$) Content**

The content of comonomers was determined by infrared (IR) spectroscopy by collecting the IR spectrum of the sample vs. an air background with a Fourier transform infrared spectrometer (FTIR). The instrument data acquisition parameters were:

- purge time: 30 seconds minimum
- collect time: 3 minutes minimum
- apodization: Happ-Genzel
- resolution: 2 $cm^{-1}$.

*Sample Preparation* - Using a hydraulic press, a thick sheet was obtained by compression molding about 1 g of sample between two aluminum foil sheets. A small portion was cut from the resulting sheet to mold a film. The film thickness was set in order to have a maximum absorbance of the $CH_2$ absorption band at ~720 $cm^{-1}$ of 1.3 a.u. (% Transmittance > 5%). The molding conditions were carried out at a temperature of about 180 $\pm$ 10 °C (356 °F) and a pressure of about 10 $kg/cm^2$ (142.2 psi) for about one minute. The pressure was then released, the sample was removed from the press and cooled to room temperature. The spectrum of the pressed film sample was recorded as a function

of absorbance vs. wavenumbers ($cm^{-1}$). The following measurements were used to calculate ethylene ($C_2$) and 1-butene ($C_4$) contents:

a) Area (At) of the combination absorption bands between 4482 and 3950 $cm^{-1}$, which is used for spectrometric normalization of film thickness.
b) Area ($A_{C2}$) of the absorption band due to methylenic sequences ($CH_2$ rocking vibration) in a range of 660-790 $cm^{-1}$ after a proper digital subtraction of an isotactic polypropylene (IPP) and a $C_2C_4$ references spectrum.
c) The factor of subtraction ($FCR_{C4}$) between the spectrum of the polymer sample and the $C_2C_4$ reference spectrum: The reference spectrum is obtained by performing a digital subtraction of a linear polyethylene from a $C_2C_4$ copolymer in order to extract the $C_4$ band (ethyl group at ~771 $cm^{-1}$).

The ratio $A_{C2}/A_t$ is calibrated by analyzing ethylene-propylene standard copolymers of known compositions, as determined by NMR spectroscopy.
The assignments of the spectra, triad distribution and composition were made according to Kakugo ("Carbon-13 NMR determination of monomer sequence distribution in ethylene-propylene copolymers prepared with δ-titanium trichloride- diethylaluminum chloride," M. Kakugo, Y. Naito, K. Mizunuma and T. Miyatake, *Macromolecules,* 1982, 15, 1150).
In order to calculate the ethylene ($C_2$) and 1-butene ($C_4$) content, calibration curves were obtained by using samples of known amounts of ethylene and 1-butene that were detectable by $^{13}C$ NMR.
Calibration for ethylene - A calibration curve was obtained by plotting $A_{C2}/A_t$ versus ethylene molar percent ($\%C_{2m}$), and the coefficients $a_{C2}$, $b_{C2}$ and $c_{C2}$ were then calculated via linear regression.
Calibration for 1-butene - A calibration curve was obtained by plotting $FCR_{C4}/A_t$ versus butane molar percent ($\%C_4m$), and the coefficients $a_{C4}$, $b_{C4}$ and $C_{C4}$ were then calculated via linear regression.
The spectra of the unknown samples are recorded and then (At), ($A_{C2}$) and ($FCR_{C4}$) of the unknown sample are calculated.
The ethylene content (% molar fraction $C_{2m}$) of the sample was calculated as follows:

$$\%C2m = -b_{C2} + \frac{\sqrt{b_{C2}^2 - 4 \cdot a_{C2} \cdot (c_{C2} - \frac{A_{C2}}{A_t})}}{2 \cdot a_{C2}}$$

The 1-butene content (% molar fraction $C_{4m}$) of the sample was calculated as follows:

$$\%C4m = -b_{C4} + \frac{\sqrt{b_{C4}^2 - 4 \cdot a_{C4} \cdot (c_{C4} - \frac{FCR_{C4}}{A_t})}}{2 \cdot a_{C4}}$$

where $a_{C4}$, $b_{C4}$, $c_{C4}$, $a_{C2}$, $b_{C2}$, $c_{C2}$ are the coefficients of the two calibrations.
Changes from mol% to wt% are calculated by using molecular weights of the compound(s).
Amount (wt%) of comonomer of components A-C are calculated by using the following relationship:

$$Com_{tot} = WaCom_A + WbCom_B + WcCom_C$$

wherein Wa, Wb and Wc are the relative amount of components A, B and C, respectively, and (A+B+C=1).
$Com_{tot}$, $Com_A$, $Com_B$ and ComC are the amounts of comonomer in the total composition (tot) and in components A-C.

**Melting point**

The melting point has been measured by using a DSC instrument according to ISO 11357-3, at scanning rate of 20C/min both in cooling and heating, on a sample of weight between 5 and 7 mg., under inert N2 flow. Instrument calibration made with Indium.

**Preparation of component T2**

**Example 1- Preparation of the Polyolefin Composition**

**Catalyst precursor:**

The solid catalyst component used in the polymerization was a Ziegler-Natta catalyst component supported on magnesium chloride ($MgCl_2$) containing titanium and diisobutylphthalate as an internal donor and prepared as follows. An initial amount of microspheroidal $MgCl_2 \cdot 2.8C_2H_5OH$ was prepared according to Example 2 of U.S. Pat. No. 4,399,054, but operating at 3,000 rpm instead of 10,000 rpm. The resulting adduct was subjected to thermal dealcoholation at increasing temperatures from 30-130 °C in a nitrogen current until the molar alcohol content per mol of Mg was about 1.16. Into a 1000 mL four-necked round flask, purged with nitrogen, 500 mL of $TiCl_4$ were introduced at 0 °C. While stirring, 30 grams of the microspheroidal $MgCl_2 \cdot 1.16C_2H_5OH$ adduct (prepared as described above) were added. The temperature was raised to 120 °C and kept at this value for 60 minutes. During the temperature increase, an amount of diisobutylphthalate was added to produce a Mg/ diisobutylphthalate molar ratio of about 18. After 60 minutes, the stirring was stopped, the liquid siphoned off and the treatment with $TiCl_4$ was repeated at 100 °C for 1 hour in the presence of an amount of diisobutylphthalate to produce a Mg/ diisobutylphthalate molar ratio of about 27. The stirring was then stopped, the liquid siphoned off and the treatment with $TiCl_4$ was repeated at 100 °C for 30 min. After sedimentation and siphoning at 85 °C, the solid was washed six times with anhydrous hexane (6 x 100 ml) at 60 °C.

**Catalyst system and prepolymerization:**

Before introducing it into the polymerization reactors, the solid catalyst component described above was contacted at 30 °C for 9 minutes with aluminum triethyl (TEAL) and dicyclopentyldimethoxysilane (DCPMS) at a TEAL/DCPMS weight ratio of about 15 and in such a quantity that the TEAL/solid catalyst component weight ratio was about 4.

The catalyst system was then subjected to prepolymerization by maintaining it in a liquid propylene suspension at 50 °C for about 75 minutes before introducing it into the first polymerization reactor.

Polymerization

The polymerization was carried out in continuous mode in a series of three gas-phase reactors equipped with devices to transfer the product from the first reactor to the second one. A propylene-based polymer (A) was produced in the first gas phase polymerization reactor by feeding the prepolymerized catalyst system, hydrogen the molecular weight regulator) and propylene, all in the gas state, in a continuous and constant flow. The propylene-based polymer (A) coming from the first reactor was discharged in a continuous flow and, after having been purged of unreacted monomers, was introduced, in a continuous flow, into the second gas phase reactor, together with quantitatively constant flows of hydrogen and ethylene, all in the gas state. In the second reactor a copolymer of ethylene (B) was produced. The product coming from the second reactor was discharged in a continuous flow and, after having been purged of unreacted monomers, is introduced, in a continuous flow, into the third gas phase reactor, together with quantitatively constant flows of hydrogen, ethylene and propylene, all in the gas state. In the third reactor an ethylene-propylene polymer (C) was produced. Polymerization conditions, molar ratio of the reactants and compositions of the resulting copolymers are shown in Table 1. The polymer particles exiting the third reactor were subjected to a steam treatment to remove the reactive monomers and volatile substances and then dried. Thereafter the polymer particles were mixed with a stabilizing additive composition in a twin screw extruder Berstorff ZE 25 (length/diameter ratio of screws: 34) and extruded under a nitrogen atmosphere in the following conditions:

| | |
|---|---|
| Rotation speed: | 250 rpm; |
| Extruder output: | 15 kg/hour; |
| Melt temperature: | 245 °C. |

The stabilizing additive composition comprised the following components:

- 0.1% by weight of Irganox® 1010;
- 0.1% by weight of Irgafos® 168; and
- 0.04% by weight of DHT-4A (hydrotalcite);

where all percentage amounts refer to the total weight of the polymer and stabilizing additive composition.

Irganox® 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, and Irgafos® 168 is tris(2,4-di-tert.-butylphenyl)phosphite. The characteristics of the polymer composition, reported in Table 2, are obtained from measurements carried out on the extruded polymer, which constitutes the stabilized ethylene polymer composition according to certain embodiments disclosed herein.

Polymerization conditions, molar ratio of the reactants and compositions of the resulting copolymers are shown in Table 1.

Table 1 - Polymerization conditions

| | | |
|---|---|---|
| Example | | Example 1 |
| **1st Reactor** - **component (A)** | | |
| Temperature | °C | 60 |
| Pressure | barg | 16 |
| $H_2/C_3$- | mol. | 0.16 |
| Split | wt% | 20 |
| Xylene soluble of (A) (XSa) | wt% | 4.6 |
| **2nd Reactor** - **component (B)** | | |
| Temperature | °C | 80 |
| Pressure | barg | 18 |
| $H_2/C_2$- | mol. | 1.04 |
| $C_2$-/($C_2$- + $C_3$-) | mol. | 0.96 |
| Split | wt% | 35 |
| **3rd Reactor** - **component (C)** | | |
| Temperature | °C | 67 |
| Pressure | barg | 16 |
| $H_2/C_2$- | mol. | 0.16 |
| $C_3$-/($C_2$- + $C_3$-) | mol. | 0.42 |
| $C_4$-/($C_2$- + $C_4$-) | | 0.41 |
| Split | wt% | 45 |
| | | |
| Notes: $C_2$- = ethylene (IR); $C_3$- = propylene (IR); $C_4$- = 1-butene (IR); split = amount of polymer produced in the concerned reactor. * Calculated values. | | |

The features of the polymer of Example 1 are reported in Table 2

Table 2

| | | |
|---|---|---|
| Example | | 1 |
| component A | | |
| $C_2$ content | wt% | 0 |
| XSA | wt% | 4.6 |
| MFR | g/10 min | 110 |
| split | wt% | 20 |

(continued)

| | | |
|---|---|---|
| component B | | |
| XSB* | wt% | 1.7 |
| $C_2$ content* | wt% | 100 |
| split | wt% | 35 |
| MFR | g/10 min | 17.4 |
| Component C | | |
| XSC* | wt% | 39.5 |
| $C_2$ content* | wt% | 55.0 |
| $C_4$ content* | wt% | 23 |
| split | wt% | 45 |
| total composition | | |
| MFR | g/10 min | 0.9 |
| IV on soluble in Xylene at 25°C | dl/g | 2.75 |
| $C_2$ = ethylene; $C_4$ = 1-butene;<br>* calculated | | |

**T1 component**

T1 component is recycled PP from post consumer waste and it results in a mixture of polypropylene and polyethylene polymers. The main feature of T1 has been reported in Table 3:

Table 3

| | | T1 |
|---|---|---|
| Melt flow rate (230 °C/ 2.16 kg) | g/10 min | 10.2 |
| Ethylene content | Wt% | 12.0 |
| Xylene solubles at 25°C XS | % | 10.9 |
| Intrinsic viscosity of XS | dl/g | 1.57 |
| Melting point | °C | 158.9 |
| Tensile modulus | MPa | 1170 |
| Tensile stress @ yield | MPa | 26.3 |
| Elongation @ yield | % | 9.8 |
| Tensile stress @break | MPa | 17.2 |
| Elongation @break | % | 54 |

To component T1 irganox 1010 (90 ppm); irganox 1076 (<20 ppm) ; irganox 1024 (100 ppm); irgafos 168 (200 ppm) have been added.

T1 component has been blended with 30 wt % of various propylene based copolymers the properties of the resulting compositions are reported on table 4

Table 4

| Ex | | Comp 1 | Ex 1 | Comp 3 | Comp 4 |
|---|---|---|---|---|---|
| T1 | Wt% | 100 | 80 | 80 | 80 |
| T2: | Wt% | | | | |

(continued)

| Ex | | Comp 1 | Ex 1 | Comp 3 | Comp 4 |
|---|---|---|---|---|---|
| T3 | Wt% | | 30 | | |
| CA7320 | Wt% | 0 | | 30 | |
| *CA138A* | Wt% | 0 | | | 30 |
| Melt flow rate (230 °C/ 2.16 kg) | g/10 min | 10.2 | 6.9 | 6.4 | 6.8 |
| Tensile stress @ yield | MPa | 26.3. | 19 | 18.4 | 19.4 |
| Elongation @ yield | % | 9.8 | 16 | 10.8 | 8.5 |
| Tensile stress @break | MPa | 17.2 | 21.8 | 14.8 | 14.7 |
| Elongation @break | % | 54 | 600 | 290 | 45 |

CA7320: Hifax CA 7320 A is a reactor TPO (thermoplastic polyolefin) manufactured by LyondellBasell. It is designed for use in compounds where it shows high efficiency as impact modifier. It gives excellent processability whilst maintaining optimum mechanical properties

CA138A : Hifax™ CA138A low modulus thermoplastic olefin (TPO) resin is designed for impact modification and injection molding applications. It is based on material produced by Lyondellbasell, exhibiting balanced strength, toughness, and flexibility.

The tensile properties of example 1 are better than the comparative examples in particular the elongation at break is considerably higher.

## Claims

1. A polyolefin composition comprising:

   T1) 50-90 wt%, of a recycled polyolefin mixture containing from 90 wt% to 50 wt% of propylene derived units and from 5 wt% to 40 wt% of ethylene derived units optionally containing up to 15 wt% of a one or more further olefins derived units selected from 1-butene, 1-hexene, 1-octene; said mixture having:

   i) fraction soluble in xylene at 25°C ranging from 5 wt% to 30 wt%;
   ii) intrinsic viscosity [η] (measured in tetrahydronaphthalene at 135 °C) of the xylene soluble fraction at 25°C comprised between 0.5 to 4.0 dl/g;
   iii) melt flow rate (230°C/2.16 kg) ranging between 1 and 50 g/10 min;
   iv) melting point measured by DSC ranging from 148°C to 162°C;

   T2) 10-50 wt% of a polyolefin component containing:

   A) 5-35% by weight of a propylene homopolymer or a propylene ethylene copolymer containing 90% by weight or more of propylene units; component A) containing 10% by weight or less of a fraction soluble in xylene at 25°C (XSA), both the amount of propylene units and of the fraction XSA being referred to the weight of A);
   B) 20-50% by weight; of an ethylene homopolymer having 5% by weight or less of a fraction soluble in xylene at 25°C ($XS_B$) referred to the weight of (B); and
   C) 30-60% by weight of a terpolymer of ethylene, propylene and 1-butene derived units containing from 45% to 65% by weight of ethylene units; and from 15% to 38% by weight of 1-butene units; and containing from 30% to 85% by weight of a fraction soluble in xylene at 25°C (XSc), the amount of ethylene units; 1-butene units and the fraction XSc being referred to the weight of (C);

   the sum of the amount of T1) and T2), being referred to the total weight of T1) and T2), being 100 wt%;
   the amounts of (A), (B) and (C) being referred to the total weight of (A) + (B) + (C), the sum of the amount of (A) + (B) + (C) being 100 wt%.

2. The polyolefin compositions according to claim 1 wherein:

Component A ranges from 10 % by weight to 30 % by weight;
Component B ranges from 25 % by weight to 45 % by weight; and
Component C ranges from 35 % by weight to 55 % by weight;

**3.** The polyolefin composition according to claims 1 or 2 wherein

Component A ranges from 15 % by weight to 23 % by weight;
Component B ranges from 30 % by weight to 40 % by weight; and
Component C ranges from 40 % by weight to 50 % by weight.

**4.** polyolefin compositions according to anyone of claims 1-3 wherein component A) is a polypropylene homopolymer

**5.** The polyolefin composition according to anyone of claims 1-4 wherein component B) is an ethylene homopolymer having 4 wt% or less of a fraction soluble in xylene at 25°C ($XS_B$).

**6.** The polyolefin composition according to anyone of claims 1-5 wherein component C) is terpolymer of ethylene, propylene and 1-butene containing from 48 % to 62 % by weight; of ethylene units; and from 18 % to 33 % by weight of 1-butene units.

**7.** The polyolefin compositions according to anyone of claims 1-6 wherein component (A) has the melt flow rate (230°C/2.16 kg) ranging between 50 and 200 g/10 min;

**8.** The polyolefin composition according to anyone of claims 1-7 wherein component (B) has the melt flow rate (230°C/2.16 kg) ranging between 0.1 and 70 g/10 min.

**9.** The polyolefin composition according to anyone of claims 1-8 wherein component (A) has the melt flow rate (230°C/2.16 kg) ranging between 80 and 170 g/10 min;.

**10.** The polyolefin composition according to anyone of claims 1-9 wherein component (B) has the melt flow rate (230°C/2.16 kg) ranging between 0.1 and 30 g/10 min.

**11.** The polyolefin compositions according to anyone of claims 1- 10 wherein component T1) is a mixture of recycled polypropylene and polyethylene blend.

**12.** The polyolefin compositions according to anyone of claims 1-11 wherein component T1) has a tensile modulus ranging from 500 MPa to 1800 MPa.

**13.** The polyolefin compositions according to anyone of claims 1-12 wherein component T1) has an elongation at break ranging from 20 % to 200 %.

**14.** The polyolefin compositions according to anyone of claims 1-13 wherein component T1) has a tensile stress at break ranging from 9 MPa to 30 Mpa.

**15.** The polyolefin compositions according to anyone of claims 1-13 wherein component T1) ranges from 60 to 80 wt% and component T2) ranges from 40 to 20 wt%.

**Patentansprüche**

**1.** Polyolefinzusammensetzung, umfassend:

T1) 50 bis 90 Gew.% einer recycelten Polyolefinmischung, die 90 Gew.% bis 50 Gew.% von Propylen abgeleitete Einheiten und 5 Gew.% bis 40 Gew.% von Ethylen abgeleitete Einheiten enthält und gegebenenfalls bis zu 15 Gew.% Einheiten enthält, die von einem oder mehreren weiteren Olefinen abgeleitet sind, das/die ausgewählt ist/sind aus 1-Buten, 1-Hexen, 1-Octen; wobei die Mischung aufweist:

i) eine in Xylol bei 25 °C lösliche Fraktion im Bereich von 5 Gew.% bis 30 Gew.%;
ii) eine Grenzviskosität [η] (gemessen in Tetrahydronaphthalin bei 135 °C) der in Xylol bei 25 °C löslichen

Fraktion von 0,5 bis 4,0 dl/g;
iii) eine Schmelzflussrate (230 °C/2,16 kg) im Bereich von 1 bis 50 g/10 min;
iv) einen gemäß DSC gemessenen Schmelzpunkt im Bereich von 148 °C bis 162 °C;

T2) 10 bis 50 Gew.% einer Polyolefinkomponente, welche enthält:

A) 5 bis 35 Gew.% von einem Propylenhomopolymer oder Propylen-Ethylen-Copolymer, das 90 Gew.% oder mehr Propyleneinheiten enthält; wobei Komponente A) 10 Gew.% oder weniger von einer in Xylol bei 25 °C löslichen Fraktion ($XS_A$) enthält, wobei sich sowohl die Menge der Propyleneinheiten als auch diejenige der Fraktion $XS_A$ auf das Gewicht von A) beziehen;
B) 20 bis 50 Gew.% eines Ethylenhomopolymers, das 5 Gew.% oder weniger von einer in Xylol bei 25 °C löslichen Fraktion ($XS_B$) aufweist, bezogen auf das Gewicht von (B); und
C) 30 bis 60 Gew.% eines Terpolymers aus von Ethylen, Propylen und 1-Buten abgeleiteten Einheiten, das 45 Gew.% bis 65 Gew.% Ethyleneinheiten und 15 Gew.% bis 38 Gew.% 1-Buteneinheiten enthält und 30 Gew.% bis 85 Gew.% einer in Xylol bei 25 °C löslichen Fraktion (XSc) enthält, wobei die Mengen der Ethyleneinheiten; 1-Buteneinheiten und der Fraktion XSc sich auf das Gewicht von (C) beziehen;
die Summe der Menge von T1) und T2), die als das Gesamtgewicht von T1) und T2) bezeichnet wird, 100 Gew.% beträgt;

die Mengen von (A), (B) und (C) sich auf das Gesamtgewicht von (A) + (B) + (C) beziehen, wobei die Summe der Mengen von (A), (B) und (C) 100 Gew.% ergibt.

**2.** Polyolefinzusammensetzungen nach Anspruch 1, wobei:

Komponente A im Bereich von 10 Gew.% bis 30 Gew.% liegt;
Komponente B im Bereich von 25 Gew.% bis 45 Gew.% liegt; und
Komponente C im Bereich von 35 Gew.% bis 55 Gew.% liegt.

**3.** Polyolefinzusammensetzung nach Anspruch 1 oder 2, wobei

Komponente A im Bereich von 15 Gew.% bis 23 Gew.% liegt;
Komponente B im Bereich von 30 Gew.% bis 40 Gew.% liegt; und
Komponente C im Bereich von 40 Gew.% bis 50 Gew.% liegt.

**4.** Polyolefinzusammensetzungen nach einem der Ansprüche 1 bis 3, wobei Komponente A) ein Polypropylenhomopolymer ist.

**5.** Polyolefinzusammensetzung nach einem der Ansprüche 1 bis 4, wobei Komponente B) ein Ethylenhomopolymer mit 4 Gew.% oder weniger von einer in Xylol bei 25 °C löslichen Fraktion ($XS_B$) ist.

**6.** Polyolefinzusammensetzung nach einem der Ansprüche 1 bis 5, wobei Komponente C) Terpolymer aus Ethylen, Propylen und 1-Buten ist, das 48 Gew.% bis 62 Gew.% Ethyleneinheiten und 18 Gew.% bis 33 Gew.% 1-Buteneinheiten enthält.

**7.** Polyolefinzusammensetzungen nach einem der Ansprüche 1 bis 6, wobei Komponente (A) eine Schmelzflussrate (230 °C/2,16 kg) im Bereich von 50 bis 200 g/10 min aufweist.

**8.** Polyolefinzusammensetzung nach einem der Ansprüche 1 bis 7, wobei Komponente (B) eine Schmelzflussrate (230 °C/2,16 kg) im Bereich von 0,1 bis 70 g/10 min aufweist.

**9.** Polyolefinzusammensetzung nach einem der Ansprüche 1 bis 8, wobei Komponente (A) eine Schmelzflussrate (230 °C/2,16 kg) im Bereich von 80 bis 170 g/10 min aufweist.

**10.** Polyolefinzusammensetzung nach einem der Ansprüche 1 bis 9, wobei Komponente (B) eine Schmelzflussrate (230 °C/2,16 kg) im Bereich von 0,1 bis 30 g/10 min aufweist.

**11.** Polyolefinzusammensetzungen nach einem der Ansprüche 1 bis 10, wobei Komponente T1) eine Mischung aus recyceltem Polypropylen und Polyethylengemisch ist.

**12.** Polyolefinzusammensetzungen nach einem der Ansprüche 1 bis 11, wobei Komponente T1) einen Zugmodul im Bereich von 500 MPa bis 1800 MPa hat.

**13.** Polyolefinzusammensetzungen nach einem der Ansprüche 1 bis 12, wobei Komponente T1) eine Bruchdehnung im Bereich von 20 % bis 200 % hat.

**14.** Polyolefinzusammensetzungen nach einem der Ansprüche 1 bis 13, wobei Komponente T1) eine Bruchspannung im Bereich von 9 MPa bis 30 MPa hat.

**15.** Polyolefinzusammensetzungen nach einem der Ansprüche 1 bis 13, wobei Komponente T1 im Bereich von 60 bis 80 Gew.% und Komponente T2 im Bereich von 40 bis 20 Gew.% liegt.

**Revendications**

**1.** Composition polyoléfinique comprenant :

T1) 50 à 90 % en poids d'un mélange de polyoléfines recyclées contenant 9 % en poids à 50 % en poids de motifs dérivés du propylène et 5 % en poids à 40 % en poids de motifs dérivés de l'éthylène contenant éventuellement jusqu'à 15 % en poids d'un ou plusieurs autres motifs dérivés d'oléfines choisis parmi le 1-butène, le 1-hexène, le 1-octène ; ledit mélange présentant :

i) une fraction soluble dans le xylène à 25 °C dans la plage de 5 % en poids à 30 % en poids ;
ii) une viscosité intrinsèque [η] (mesurée dans le tétrahydronaphtalène à 135 °C) de la fraction soluble dans le xylène à 25 °C comprise entre 0,5 et 4,0 dl/g ;
iii) un indice de fluidité à chaud (230 °C/2,16 kg) dans la plage entre 1 et 50 g/10 min ;
iv) un point de fusion mesuré par DSC dans la plage de 148 °C à 162 °C ;

T2) 10 à 50 % en poids d'un constituant polyoléfinique contenant :

A) 5-35% en poids d'un homopolymère de propylène ou d'un copolymère de propylène-éthylène contenant 90 % en poids ou plusieurs de motifs de propylène ; le constituant A) contenant 10 % en poids ou moins d'une fraction soluble dans le xylène à 25 °C ($XS_A$), à la fois la quantité de motifs de propylène et de la fraction $XS_A$ se rapportant au poids de A) ;
B) 20-50 % en poids d'un homopolymère d'éthylène présentant 5 % en poids ou moins d'une fraction soluble dans le xylène à 25 °C ($XS_B$) par rapport au poids de (B) ; et
C) 30-60 % en poids d'un terpolymère de motifs dérivés d'éthylène, de propylène et de 1-butène contenant 45 % à 65 % en poids de motifs d'éthylène ; et 15 % à 38 % en poids de motifs de 1-butène ; et contenant 30 % à 85 % en poids d'une fraction soluble dans le xylène à 25 °C (XSc), la quantité de motifs d'éthylène, de motifs de 1-butène et la fraction XSc se rapportant au poids de (C) ;

la somme de la quantité de T1) et de T2), se rapportant au poids total de T1) et de T2), valant 100 % en poids ; les quantités de (A), (B) et (C) se rapportant au poids total de (A) + (B) + (C), la somme des quantités de (A) + (B) + (C) valant 100 % en poids.

**2.** Compositions polyoléfiniques selon la revendication 1, où :

le constituant A représente 10 % en poids à 30 % en poids ;
le constituant B représente 25 % en poids à 45 % en poids ; et
le constituant C représente 35 % en poids à 55 % en poids ;

**3.** Composition polyoléfinique selon les revendications 1 ou 2, où

le constituant A représente 15 % en poids à 23 % en poids ;
le constituant B représente 30 % en poids à 40 % en poids ; et
le constituant C représente 40 % en poids à 50 % en poids.

**4.** Compositions polyoléfiniques selon l'une quelconque des revendications 1 à 3, où le constituant A) est un homopolymère de polypropylène

5. Composition polyoléfinique selon l'une quelconque des revendications 1 à 4, où le constituant B) est un homopolymère d'éthylène présentant 4 % en poids ou moins d'une fraction soluble dans le xylène à 25 °C ($XS_B$).

6. Composition polyoléfinique selon l'une quelconque des revendications 1 à 5, où le constituant C) est un terpolymère d'éthylène, de propylène et de 1-butène contenant 48 % à 62 % en poids de motifs d'éthylène et 18 % à 33 % en poids de motifs de 1-butène.

7. Compositions polyoléfiniques selon l'une quelconque des revendications 1 à 6, où l'indice de fluidité à chaud (230 °C/2,16 kg) du constituant (A) est situé dans la plage entre 50 et 200 g/10 min.

8. Composition polyoléfinique selon l'une quelconque des revendications 1 à 7, où l'indice de fluidité à chaud (230 °C/2,16 kg) du constituant (B) est situé dans la plage entre 0,1 et 70 g/10 min.

9. Composition polyoléfinique selon l'une quelconque des revendications 1 à 8, où l'indice de fluidité à chaud (230 °C/2,16 kg) du constituant (A) est situé dans la plage entre 80 et 170 g/10 min.

10. Composition polyoléfinique selon l'une quelconque des revendications 1 à 9, où l'indice de fluidité à chaud (230 °C/2,16 kg) du constituant (B) est situé dans la plage entre 0,1 et 30 g/10 min.

11. Compositions polyoléfiniques selon l'une quelconque des revendications 1 à 10, où le constituant T1) est un mélange de polypropylène recyclé et de mélange de polyéthylène.

12. Compositions polyoléfiniques selon l'une quelconque des revendications 1 à 11, où le constituant T1) présente un module de traction dans la plage de 500 MPa à 1800 MPa.

13. Compositions polyoléfiniques selon l'une quelconque des revendications 1 à 12, où le constituant T1) présente un allongement à la rupture dans la plage de 20 % à 200 %.

14. Compositions polyoléfiniques selon l'une quelconque des revendications 1 à 13, où le constituant T1) présente une contrainte de traction à la rupture dans la plage de 9 MPa à 30 MPa.

15. Compositions polyoléfiniques selon l'une quelconque des revendications 1 à 13, où le constituant T1) représente 60 à 80 % en poids et le constituant T2) représente 40 à 20 % en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013075241 A1
- US 4399054 A
- EP 45977 A
- EP 361493 A
- EP 728769 A


### Non-patent literature cited in the description


- **WEI ZHU et al.** *Journal of Applied Polymer Science,* 1995, vol. 58, 515-521